# EUROPÄISCHE PATENTANMELDUNG

(11) **EP 2 733 504 A1**
(43) Veröffentlichungstag der Anmeldung: **21.05.2014**
(21) Anmeldenummer: 13186978.6
(22) Anmeldetag: 01.10.2013
(51) Int. Cl.: G01S 15/10

(54) **Unterwassersignalfolge, Sendeeinrichtung und Auswertevorrichtung sowie Wasserfahrzeug oder Wasserfahrzeugflotte**

(30) Priorität: 14.11.2012 DE 102012110943
(71) Anmelder: ATLAS ELEKTRONIK GmbH, 28309 Bremen (DE)
(72) Erfinder: Freking, Benno, 28844 Weyhe-Leeste (DE); Jansen, Johannes, 28832 Achim (DE)

(57) **Zusammenfassung**

Bei Echoloten, welche insbesondere Multipingverfahren einsetzen, ist bekannt, dass es bei mehreren Lotungen in einer Wassersäule zu einer falschen Zuordnung des Empfangsechos zu den Sendezeitpunkten kommen kann. Dies hat wiederum zur Folge, dass eine falsche Laufzeit bestimmt wird, welche wiederum zu einer falsch bestimmten Entfernungsangabe führt.

Die Erfindung betrifft eine Unterwassersignalfolge mit wenigstens zwei akustischen Subsignalen, wobei jedem Subsignal jeweils ein Sendezeitindex und ein Erwartungszeitindex zugeordnet ist und durch eine Unterwassersignalfolgen-Korrelation der empfangenen Signale jedes einzelne Subsignal identifizierbar ist.

Mit dieser Unterwassersignalfolge kann ein kodiertes Signal bereitgestellt werden, mit dem ein einzelner Ping eines Sonars eindeutig identifizierbar ist.

## Beschreibung

Die Erfindung betrifft eine Unterwassersignalfolge mit wenigstens zwei akustischen Subsignalen, wobei jedem Subsignal jeweils ein Sendezeitindex und ein Erwartungszeitindex zugeordnet ist, eine Sendeeinrichtung mit einem Unterwassersignalgeber, eine Auswertevorrichtung, welche eine Empfangsvorrichtung und die Sendeeinrichtung aufweist, sowie ein Wasserfahrzeug und eine Wasserfahrzeugflotte.

Bei Echoloten, welche insbesondere Multipingverfahren einsetzen, ist bekannt, dass es bei mehreren Lotungen in einer Wassersäule zu einer falschen Zuordnung des Empfangsechos zu den Sendezeitpunkten kommen kann. Dies hat wiederum zur Folge, dass eine falsche Laufzeit bestimmt wird, welche wiederum zu einer falsch bestimmten Tiefenangabe führt.

Grundsätzlich werden solche Falschzuordnungen häufig nicht erkannt. Falls diese dennoch erkannt wurden - z.B. anhand von Seekartendaten oder mit den Daten eines anderen Lotes - wird im Allgemeinen die Anzahl der Lotungen auf eine einzelne Lotung verringert, um die Tiefe neu zu bestimmen. Nach dem korrekten Ermitteln der Wassertiefe kann die Lotrate sukzessive erhöht werden. Dieses Vorgehen stellt lediglich einen Notbehelf dar, da bevorzugt mit hohen Lotraten gearbeitet werden soll.

Aufgabe der Erfindung ist es, den Stand der Technik zu verbessern.

Gelöst wird die Aufgabe durch eine Unterwassersignalfolge mit wenigstens zwei akustischen Subsignalen, wobei jedem Subsignal jeweils ein Sendezeitindex und ein Erwartungszeitindex zugeordnet ist und durch eine Unterwassersignalfolgen-Korrelation jedes einzelne Subsignal identifizierbar ist.

Somit kann eine Unterwassersignalfolge bereitgestellt werden, mit der in einem Multipingbetrieb Entfernungsmessung, insbesondere eine Entfernung zu einem See- oder Meeresboden, mit großer Robustheit und Sicherheit durchgeführt werden, da jedes Echo dem entsprechenden Sendesignal eindeutig zugeordnet werden kann.

Weiterhin kann eine eindeutige Zuordnung der empfangenen Signale zu den ausgesandten Sendepings realisiert werden.

Zudem kann die Gefahr einer falschen Zuordnung eines Empfangssignals zu einem Sendesignal und somit einer falschen Entfernungsberechnung verringert oder ausgeschlossen werden.

Es kann eine zeitlich kodierte Sendesignalfolge bereitgestellt werden. Grundsätzlich kann über diese Kodierung - quasi als Nebeneffekt - eine digitale Kommunikations-Möglichkeit umgesetzt werden.

Besonders vorteilhaft ist, dass bei der vorgeschlagenen Lösung immer mit einer hohen, insbesondere mit der höchsten, Lotrate, gearbeitet werden kann, wobei jede einzelne Lotung eindeutig zuordenbar ist. Eine maximierte (hohe) Lotrate ist insbesondere dann gegeben, wenn die Anzahl an Signalen in einem Wasservolumen erhöht werden kann. Somit kann der Seeboden oder ein anderes Ziel hochaufgelöst verfolgt werden.

Folgende Begrifflichkeiten seien erläutert:

Allgemein verknüpft eine "Unterwassersignalfolge" Subsignale miteinander zu einem logischen Verbund. Eine "Unterwassersignalfolge" mit einer bestimmten Abfolge der akustischen Subsignale wird insbesondere wiederholt ausgesandt, so dass sich das Muster immer wieder wiederholt. Dabei kann in größeren Zeitabständen, z.B. nach fünf Wiederholungen derselben Abfolge von Subsignalen, eine geänderte Abfolge von Subsignalen ausgesandt werden.

Ein "akustisches Subsignal" umfasst insbesondere einen Signalimpuls, auch Signalping genannt, eines Aktiv-Sonars, wie beispielsweise eines Echolots. "Akustisch" im vorliegenden Sinne bedeutet insbesondere Infraschall, hörbarer Schall und Ultraschall. Insbesondere umfasst sind niederfrequente (1-Hz-Bereich), bis hochfrequente (MHz-Bereich) Schallwellen. Ein akustisches Subsignal wird insbesondere über einen piezokeramischen Schallgeber einer Wassersäule aufgeprägt.

Weiterhin kann das Subsignal selbst unterschiedliche Signalpegel und Modulationsverfahren aufweisen. Die Signalpegel können insbesondere den Wert "0" annehmen. So kann ein Subsignal beispielsweise keinen Signalpegel, einen Signalpegel und anschließend wieder keinen Signalpegel aufweisen. In diesem Fall liegt dann beispielsweise eine 010 Binärcodierung vor. Beispielsweise ist auch das inverse Signalverhalten möglich, so dass eine 101 Binärcodierung des Subsignals vorliegt.

Insbesondere kann auch ein Subsignal ohne Signalstärke vorliegen. Im Sinne einer - wie auch insbesondere hier vorliegenden - binären Kodierung entspräche dies beispielsweise der "0", während ein voller Signalpegel die "1" repräsentieren kann.

Der "Sendezeitindex" beschreibt den Zeitpunkt, an dem das akustische Subsignal tatsächlich ausgesandt wurde oder ausgesendet werden soll.

Der "Erwartungszeitindex" ist der Zeitpunkt an dem erwartungsgemäß ein Aussenden eines Subsignals erfolgen sollte. Anschaulich beschreibt der Erwartungszeitindex bei einer konstanten Pingrate (Subsignalrate) den Zeitpunkt, zu dem das Signal ausgesandt wird. Der Erwartungszeitindex kann äquidistant oder variabel sein.

Bei einer "Unterwassersignalfolgen-Korrelation" können insbesondere die ausgesandten Unterwassersignalfolgen mit empfangenen Unterwassersignalfolgen verglichen (korreliert) werden. Insbesondere sind sämtliche Autokorrelationsverfahren umfasst. Somit kann ein eindeutiges Identifizieren eines Subsignals erfolgen. Anhand des Sendezeitindexes - also dem echten Zeitpunkt des Aussendens des Subsignals - und der Laufzeit bis zum Detektieren des identifizierten Subsignals kann insbesondere eine Entfernungsbestimmung, wie beispielsweise eine Tiefenbestimmung, erfolgen.

Unter "identifizierbar" wird insbesondere verstanden, dass anhand des akustischen Subsignals und/oder des Sendezeitindexes oder des Erwartungszeitindexes ein empfangenes Subsignal eindeutig einem Sendezeitpunkt zuordenbar ist. Dabei kann das Identifizieren insbesondere dadurch erfolgen, dass eine empfangene Signalfolge mit einem Sendemusters dieser empfangenen Signalfolge korreliert wird. Somit wird insbesondere die empfangene Signalfolge mittels einer zeitlichen Zuordnung zur vorherig ausgesandten (bekannten) Signalfolgen erkannt.

In einer weiteren Ausführungsform weist die Unterwassersignalfolge drei, vier, fünf, sechs, sieben, acht, neun, zehn oder mehr akustische Subsignale auf.

Je höher die Anzahl der Subsignale, desto sicherer kann die Identifizierung eines einzelnen Subsignals erfolgen. Andererseits kann eine zu hohe Anzahl von Subsignalen die Dauer bis zum Vorliegen einer gesicherten Entfernung oder Tiefe verzögern. Als besonders sinnvoll haben sich 3 bis 20, insbesondere 3 bis 7, Subsignale für eine Unterwassersignalfolge erwiesen.

Um eine Einsatzfähigkeit in einem Schiff zu gewährleisten, kann eines der Subsignale ein aktives Sonar-Signal, insbesondere ein Echolotsignal, sein. Somit können diese Signale zur Messung oder Auswertung von Entfernungs-Informationen verwendet werden.

Ein "Sonar" ist allgemein ein "Verfahren zur Ortung von Gegenständen unter Wasser mithilfe ausgesandter Schallimpulse". Das Wort "Sonar" ist ein englisches Akronym von "sound navigation and ranging", was sich mit Schall-Navigation und -Entfernungsbestimmung übersetzen lässt.

Sonar-Messtechniken nutzen die Tatsache aus, dass sich Schall unter Wasser sehr viel verlustärmer ausbreitet als in der Luft. Aus historischen Gründen wird begrifflich unterschieden zwischen Sonargeräten (kurz als "Sonare" bezeichnet), die überwiegend horizontal, und "Echoloten", die überwiegend vertikal orten. Vorliegend soll hier keine diesbezügliche Einschränkung erfolgen. Mithin sind beide Begrifflichkeiten erfindungsgemäß umfasst. Mit den hier vorliegenden Echoloten sind auch sogenannte Fächerlote mit umfasst.

Schallsignale können bei der Echoortung oder zur Lokalisation von Objekten eingesetzt werden.

In einer weiteren Ausführungsform weist eine Subsignalabstandszeit den Wert t=0s oder einen Wert t>0s auf.

Je kleiner der Wert für t gewählt wird, desto höher kann die Repetitionsrate der Subsignale gewählt werden.

Eine "Subsignalabstandszeit" ist die Zeit, die vergeht zwischen dem Ende eines ersten Subsignals und dem Beginn eines auf das erste direkt folgenden Subsignals. Im Falle des Wertes t=0s folgen die Signale direkt aufeinander.

So kann beispielsweise eine Signalfolge mit drei jeweils direkt nacheinander folgenden Subsignalen die Binärkodierung 111 repräsentieren. Für den Fall, dass das zweite Signal bewusst nicht ausgesandt wird liegt die Binärkodierung 101 vor. In diesem Fall ist die Subsignalabstandszeit dennoch t=0s, da nach dem ersten Subsignal direkt das zweite Subsignal mit einer Signalstärke "0" folgt.

Bei Subsignalabstandszeiten von t>0s ist die Signaldauer eines Subsignals kleiner als der Zeitabstand zwischen zwei aufeinanderfolgende Erwartungszeitindices.

In einer weiteren Ausführungsform weist wenigstens ein Subsignal eine Abweichung zwischen dem Sendezeitindex und dem Erwartungszeitindex auf.

Somit kann bei gleicher Signalform der ausgesandten Subsignale einer Unterwassersignalfolge eine Kodierung realisiert werden.

Beispielsweise kann eine Unterwassersignalfolge mit drei Subsignalen wie folgt aussehen. Erstes Subsignal wird zum Erwartungszeitindex ausgesandt. Somit sind Erwartungszeitindex und Sendezeitindex identisch. Das darauffolgende (zweite) Subsignal wird kurz (einige 10ms) vor dem Erwartungszeitindex des zweiten Subsignals zum Zeitpunkt des Sendeindexes und das dritte Subsignal kurz nach dem Erwartungszeitindex des dritten Subsignals zum Zeitpunkt des Sendeindexes ausgesandt.

Daraus ergäbe sich folgende Kodierung 0;-1;+1.

Diese Kodierung der Unterwassersignalfolge kann von anschließenden Unterwassersignalfolgen ebenfalls ausgesandt werden, wobei beim Empfang durch Korrelation die Sendeindices der einzelnen Subsignale eindeutig zuordenbar sind.

Eine "Abweichung" liegt mithin insbesondere dann vor, wenn Erwartungszeitindex und Sendezeitindex für ein zugehöriges Subsignal sich unterscheiden. Es sind sowohl positive als auch negative Abweichungen möglich.

Um eine Code-Stabilität zu erhöhen, können jeweils zwei, drei, vier oder mehr aufeinanderfolgende Subsignale identisch gruppiert sein.

Beispielsweise könnte die Unterwassersignalfolge 9 Subsignale aufweisen. Eine Gruppierung in drei Subsignalgruppen ist realisierbar. So kann eine Kodierung von 0;-1;+1 dadurch realisiert werden, dass jeweils die ersten drei aufeinanderfolgenden Subsignale die Abweichung t=0, das 4., 5. und 6. Subsignal die Abweichung t=-5ms und die letzten drei aufeinanderfolgenden Subsignale jeweils die Abweichung t=+8ms aufweisen.

Eine "identische Gruppierung" ist insbesondere dann gegeben, wenn aufeinanderfolgende Subsignale die gleiche Signalform und/oder die gleiche zeitliche Abweichung aufweisen.

In einer weiteren Ausprägungsform sind die Subsignale frequenzkodierungsfrei und/oder phasensprungfrei.

Somit kann ohne weitere Hilfsmittel eine stabile Kodierung bereitgestellt werden. Zudem können alle Subsignale mit der gleichen (beliebigen) Signalform ausgesandt werden. Dies verringert den technischen Aufwand, frequenzkodierte Signale oder Signale mit aufgeprägtem Phasensprung zu verwenden. Mithin können die Subsignale mit günstigeren Bauteilen realisiert werden, wodurch sich insbesondere die Kosten für ein Aktiv-Sonar-System verringern.

An dieser Stelle sei angemerkt, dass die Subsignale durchaus zusätzlich eine Frequenzkodierung und/oder einen Phasensprung aufweisen können oder den Subsignalen eine weitere Kodierung aufgeprägt ist oder die Subsignale mit bekannten Modulationsverfahren verarbeitet wurden.

Eine Frequenzkodierung liegt insbesondere dann vor, wenn ein einzelnes Subsignal unterschiedliche Frequenzen oder unterschiedliche Subsignale unterschiedlicher Sendefrequenzen aufweist.

"Frequenzkodierungsfrei" ist ein Subsignal dann, wenn dem Subsignal oder mehreren Subsignalen keine unterschiedlichen Sendefrequenzen aufgeprägt werden, d.h., dass insbesondere ein Ultraschallsignal einer Sendefrequenz eingesetzt wird.

Ein Phasensprung ist ein physikalischer Vorgang, bei dem sich die Phase einer Welle abrupt ändert. Bei Unterwasserschallwellen können den Signalen insbesondere Phasensprünge von 0°/180° oder 0°/90°/180°/270° oder weitere beliebig vordefinierte Phasen aufgeprägt werden.

"Phasensprungfrei" ist ein Subsignal dann, wenn dem Subsignal beim Aussenden kein Phasensprung aufgeprägt wird.

Um weitere Informationen dem Subsignal oder der Unterwassersignalfolge aufzuprägen, können die Subsignale eine zusätzliche Kodierung oder Modulation aufweisen.

In einem weiteren Aspekt wird die Aufgabe gelöst durch eine Sendeeinrichtung mit einem Unterwassersignalgeber, wobei die Sendeeinrichtung derart eingerichtet ist, dass der Unterwassersignalgeber eine zuvor beschriebene Unterwassersignalfolge aussendet.

Somit kann eine Sendeeinrichtung bereitgestellt werden, welche zuvor beschriebene Unterwassersignalfolgen aussendet.

Ein "Unterwassersignalgeber" ist beispielsweise ein Keramiklautsprecher, welcher beispielsweise aufgrund seiner piezoelektrischen Eigenschaften einer Wassersäule ein Schallsignal aufprägen kann.

In einem weiteren Aspekt der Erfindung wird die Aufgabe gelöst durch eine Auswertevorrichtung, insbesondere ein Sonar oder ein Echolot, welche eine Empfangseinrichtung und eine zuvor beschriebene Sendeeinrichtung aufweist, wobei die Empfangseinrichtung einen Unterwasserschallwandler, insbesondere ein Unterwassermikrophon, aufweist.

Mittels der "Auswertevorrichtung" werden die Signale der Empfangseinrichtung ausgewertet. So kann beispielsweise die Tiefe anhand einer bestimmten Laufzeit ermittelt und einem Benutzer angezeigt werden.

Eine "Empfangseinrichtung" bereitet die am Unterwasserschallwandler anliegenden Signale auf, so dass diese beispielsweise mittels eines Rechners weiterverarbeitet werden können. So kann die Empfangseinrichtung eine Signalkonditionierung aufweisen, welche die elektrischen Signale stabilisiert (z.B. mittels Sample-and-Hold-Schaltungen).

Ein "Unterwasserschallwandler" wird auch als Hydrophon bezeichnet. Allgemein wird als Hydrophon ein Gerät zur Wandlung von Wasserschall in eine dem Schalldruck entsprechende elektrische Größe (Spannung, Strom, Ladung) bezeichnet. Eine andere Bezeichnung ist "Unterwassermikrophon".

In einer diesbezüglichen Ausprägungsform sind die Auswertevorrichtung und/oder die Empfangseinrichtung und/oder die Sendeeinrichtung delokalisiert.

Somit kann die Unterwassersignalfolge an einem Ort ausgesandt und an einem anderen Ort empfangen werden.

Unter "Delokalisation" ist insbesondere zu verstehen, dass Sendeort und Empfangsort auseinanderfallen. So kann das Senden von einem ersten Schiff und das Empfangen auf einem zweiten Schiff oder einem U-Boot erfolgen. Die für die eindeutige Zuordnung (Korrelation) der Subsignale notwendigen Sendeinformationen können dabei mittels Funk (über Wasser) erfolgen.

Um eine Korrelation am Empfangsort zu ermöglichen, kann eine gesonderte Übermittlung der Sendeinformationen erfolgen. So kann die Auswertevorrichtung eine Korrelationseinrichtung aufweisen, welche eine durch die Sendeeinrichtung ausgesendete Signalfolge mit einer durch die Empfangseinrichtung detektierten Empfangssignalfolge korreliert.

Eine "Korrelationseinrichtung" ist insbesondere ein Rechner oder ein FPGA (Field Programmable Gate Array), welche das "Korrelieren" durchführen. Beim Korrelieren wird insbesondere eine elektronische Repräsentanz der ausgesandten Unterwassersignalfolge mit einer elektronischen Repräsentanz einer empfangenen Unterwassersignalfolge korreliert, z.B. mittels einer Autokorrelation.

Um die Funktion eines Echolotes umzusetzen, kann die Auswertevorrichtung eine Tiefenbestimmungseinrichtung aufweisen, welche insbesondere durch ein Bestimmen einer Laufzeit eines Subsignals einen Abstand zum Meeresboden ermittelt und ausgibt.

Die "Tiefenbestimmungseinrichtung" bestimmt insbesondere anhand der echten Laufzeiten, welche aufgrund der Identifizierung der Subsignale feststellbar sind, die Tiefe über dem Meeresgrund. Hierzu können wiederum Rechner, Mikrocontroller und/oder FPGAs eingesetzt werden.

Eine "Laufzeit" ist insbesondere die Zeit vom Sendezeitindex (Sendezeitpunkt) bis zum Empfangszeitpunkt eines Subsignals oder einer Signalfolge.

Weiterhin wird die Aufgabe gelöst durch ein Wasserfahrzeug, welches eine zuvor beschriebene Auswertevorrichtung aufweist. Somit können insbesondere Schiffe und U-Boote mit einem Aktiv-Sonar ausgestattet werden, welches kodierte Signale aussendet, empfängt und eindeutig identifiziert.

"Wasserfahrzeug" umfasst sämtliche auf oder unter dem Wasser fahrenden und nichtfahrenden Apparate. Auch Plattformen, wie Ölplattformen, und Bojen sind umfasst.

In einem abschließenden Aspekt der Erfindung wird die Aufgabe gelöst durch eine Wasserfahrzeugflotte mit wenigstens zwei Wasserfahrzeugen, wobei die zuvor beschriebene Sendeeinrichtung und/oder die zuvor beschriebene Auswertevorrichtung und/oder die zuvor beschriebene Empfangseinrichtung und/oder die zuvor beschriebene Korrelationseinrichtung und/oder die zuvor beschriebene Tiefenbestimmungseinrichtung der Auswertevorrichtung auf die Wasserfahrzeuge aufgeteilt sind.

Somit können Sonar-Messungen, insbesondere Echolot-Messungen, delokalisiert erfolgen.

Eine "Wasserfahrzeugflotte" umfasst wenigstens zwei Wasserfahrzeuge. Sie kann beispielsweise ein Schiff und ein U-Boot umfassen. Auch sind Kombinationen aus Bojen und Schiff möglich.

Im Weiteren wird die Erfindung anhand von Ausführungsbeispielen erläutert. Es zeigen
- Figur 1: oberhalb eine schematische Darstellung einer Unterwassersignalfolge mit einer Zeitdauer t₂-t₁ mit drei Signalabschnitten und zugehöriger Kodierung und unterhalb eine schematische Darstellung eines Zeitstrahls und zu den Signalabschnitten die zugehörigen Sendezeit- und Erwartungszeitindices,
- Figur 2: oberhalb eine schematische Darstellung einer Unterwassersignalfolge mit drei separierten Pings und unterhalb eine schematische Darstellung eines Zeitstrahls und zu den Pings die zugehörigen Sendezeit- und Erwartungszeitindices, sowie die zugehörige Kodierung,
- Figur 3: eine schematische Darstellung eines Zeitstrahls mit 9 zu je 3 gruppierten Pings und zugehörige Sendezeit- und Erwartungszeitindices sowie die zugehörige Kodierung,

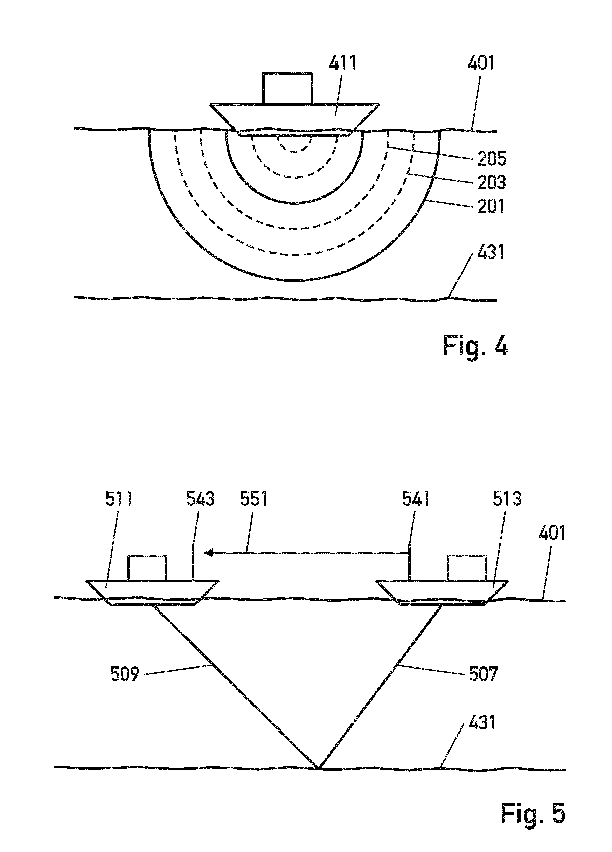

- Figur 4: eine schematische Darstellung eines Schiffs, welches Echolotsignale aussendet und
- Figur 5: eine schematische Darstellung zweier zueinander beabstandeter Schiffe, wobei das Aussenden eines Echolotsignals durch das eine Schiff und das Empfangen und Auswerten des Echolotsignals durch das andere Schiff erfolgen.

In den dargestellten Ausführungsbeispielen werden Ultraschallsignale mit einer Sendefrequenz von 150kHz und einer Bandbreite von 30kHz verwendet.

In einer ersten Alternative ist ein Sendesignal 101, 103, 105 segmentiert. Das erste Signal 101 und das dritte Signal 105 weisen einen vollen Signalpegel auf. Das zweite Signal 103 weist keinen Signalpegel auf. Zusammen bilden die Sendesignale 101, 103, 105 eine Unterwassersignalfolge. Die Kodierung dieser Unterwassersignalfolge ist 1;0;1. Bei den drei Signalen 101, 103, 105 sind Sendezeitindex s₁₋₃ und Erwartungszeitindex e₁₋₃ identisch. Alle drei Signale 101, 103, 105 zusammen haben eine Signaldauer t₂ - t₁.

Diese Unterwassersignalfolge 1;0;1 wird zum Zeitpunkt t₁ einer Wassersäule aufgeprägt.

Nach dieser Unterwassersignalfolge wird 200ms nach t₂ eine zweite Unterwassersignalfolge (nicht dargestellt) mit der Kodierung 0;1;0 ausgesandt.

Die an einem Objekt reflektierten Wellen werden mittels eines Hydrophons gemessen, elektronisch aufbereitet und mittels eines Mikrocontrollers mit den ausgesandten Unterwassersignalfolgen autokorreliert. Durch die Korrelation wird die Unterwassersignalfolge identifiziert und anhand der Laufzeit die Entfernung zum Objekt bestimmt.

In einer zweiten Alternative ist ein Sendesignal dadurch kodiert, dass den Sendesignalen 201, 203, 205 teilweise eine Abweichung (eₓ-sₓ≠0, mit x=1, 2, 3...) zwischen einem Erwartungszeitindex e₁₋₃ und einem Sendezeitindex s₁₋₃ aufgeprägt ist.

Die entsprechende Kodierung für das erste Sendesignal 201 ist "0", für das zweite Sendesignal ist "+1" und für das dritte Signal "-1". Die Signalfolge mit den drei Sendesignalen 201, 203, 205 wird regelmäßig wiederholt und von einem Schiff 411 auf dem Wasser 401 über einen Ultraschallgeber in eine Wassersäule gesandt. Das vom Meeresboden 431 reflektierte Signal wird mittels eines Ultraschallwandlers aufgenommen, elektronisch aufbereitet (Signalkonditionierung) und mit den ausgesandten Signalfolgen autokorreliert. Aus der Vielzahl von empfangenen Signalen werden die Blöcke mit der Kodierung "0;+1;-1" jeweils eindeutig bestimmt und anhand der "echten" Laufzeiten die Meerestiefe bestimmt. Dies ist insbesondere in großen Meerestiefen, insbesondere zwischen 100m und 12.000m, sehr effektiv.

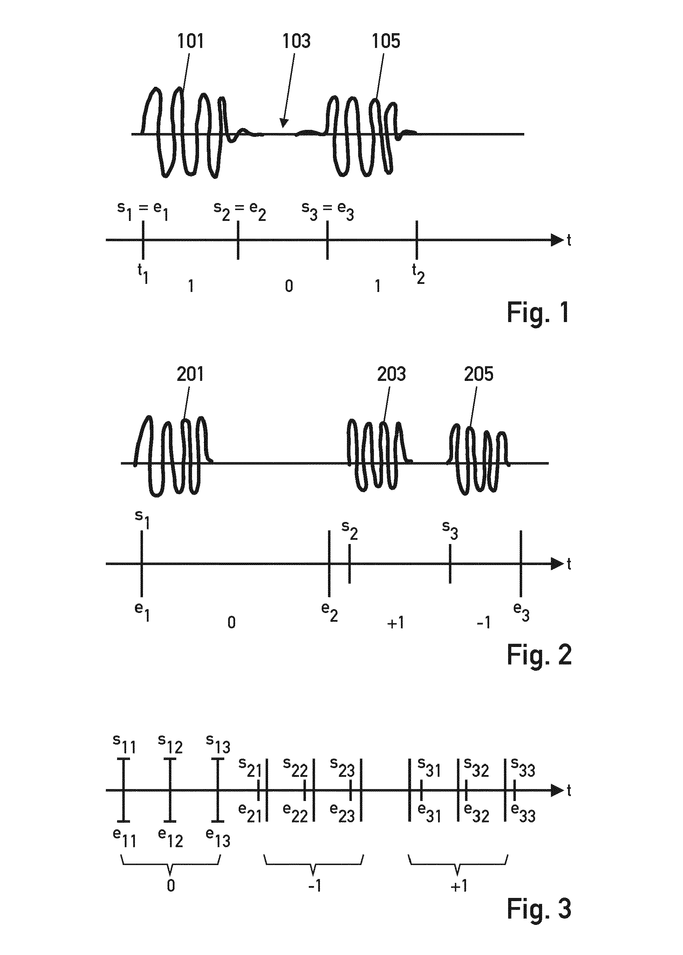

Diese zweite Alternative wird dadurch verbessert, dass die Sendesignale s_{xy}, e_{xy} gruppiert werden (siehe Fig. 3). Dabei ist "s" der Sendezeitindex, "e" der Erwartungszeitindex, und die Indizierung "x" steht für die Gruppe und die Indizierung "y" für das jeweilige Signal der Gruppe.

In der ersten Dreiergruppe (s_{1y},e_{1y}) weisen die drei Signale jeweils den gleichen Sendezeitindex und den gleiche Erwartungszeitindex auf (s_{xy} = e_{xy}). Die Sendesignalgruppe s_{1y}, e_{1y} wird dabei mit "0" kodiert. Bei der zweiten Dreiergruppe (s_{2y}, e_{2y}) werden die einzelnen Sendesignale jeweils mit einer Abweichung von 15ms vor dem Erwartungszeitindex ausgesandt, sodass Erwartungszeitindex und Sendezeitindex auseinander fallen (s_{2y} - e_{2y} ≠ 0). Gleiches gilt für die dritte Dreiergruppe (s_{3y}, e_{3y}), wobei hier das eigentliche Aussenden 10ms nach dem Erwartungszeitindex erfolgt.

Die zweite Dreiergruppe wird mit "-1" und die dritte Dreiergruppe mit "+1" kodiert.

Die Signalfolge mit den drei Dreiergruppen 0;-1;+1 wird mit einer Wiederholrate von 800ms in Richtung Meeresboden 431 ausgesandt. Die reflektierten Signale werden empfangen und wie zuvor beschrieben aufbereitet und ausgewertet, so dass am Ende eine Tiefeninformation vorliegt.

Insbesondere erfolgt das Aussenden und Auswerten der Sendesignale wie folgt:
- Festlegung des Sendezeitpunkts.
- Auswahl der Codelänge (ggf. Auswahl der Gruppierungsgrößen).
- Aussenden eines Sende-Pulses mit der für den Code festgelegten zeitlichen Verschiebung.
- Analyse eines empfangenen Amplituden-Zeit-Signals unter Verwendung der bekannten Sendezeipunkten und der bekannten für den Code vorgegebenen zeitlichen Verschiebungen.
- Im Weiteren wird die zu erfolgende Korrelationsmathematik erläutert:
   Berechnen der Start- und Endpunkte für ein Berechnen der Signalsummen. Dies erfolgt für jedes Element im Code-Buffer (Zwischenspeicher mit abgelegten Sendesignalinformationen), wobei dies abhängig von der Codelänge durchgeführt wird.
   Vorliegend gilt: A = verfrühter Bereich; B = nicht verzögerter Bereich und C = verzögerter Bereich
   Falls der aktuelle Code gleich -1 ist: sigAdd = A; sigSubA = B; sigSubB = C
   Falls der aktuelle Code gleich 0 ist: sigAdd = B; sigSubA = A ; sigSubB = C
   Falls der aktuelle Code gleich +1 ist: sigAdd = C; sigSubA = A ; sigSubB = B
   Die Abkürzung "sig" steht für Signal und die Abkürzungen "Add" und "Sub" geben den Zeitversatz an. Berechnung der Korrelation erfolgt durch Berechnen der Korrelationssummen unter Zuhilfenahme aller Code-Elemente des Code-Buffers (Codepuffer)
   Berechnen der drei Signalsummen: sigAdd, sigSubA, sigSubB. Es wird der größere Wert (Max) der beiden Summen sigSubA und sigSubB von der Summe sigAdd subtrahiert. Die Differenz sigAdd-Max(sigSubA, sigSubB) wird jeweils beim Korrelationspuffer aufaddiert.
   Berechnen der Anzahl der Kode-Übereinstimmungen unter Zuhilfenahme aller Code-Elemente des Code-Buffers.
   Berechnen der Übereinstimmungen erfolgt nach: Eine Übereinstimmung liegt dann vor, falls das Signal an der richtigen Stelle größer ist als beide Signale der Nachbarbereiche (sigAdd > sigSubA) und (sigAdd > sigSubB). Falls die Bedingung erfüllt ist, wird die Anzahl der Übereinstimmungen um 1 erhöht. Falls sie nicht erfüllt ist, wird die Anzahl der Übereinstimmungen um 1 verringert.
- Bestimmen des Korrelationsmaximums für den gesuchten Code.
- Bestimmen des Zeitbereichs für die Laufzeitbestimmung
- Bestimmen der Laufzeit unter Verwenden von Sendezeitpunkt und Zeitbereich für die Laufzeitbestimmung.
- Festlegen des nächsten Sendezeitpunktes, wobei der Sendezeitpunkt hinreichend vom Empfangszeitpunkt entfernt ist.
- Weiterschalten auf das nächste Code-Element. Falls das letzte Element erreicht ist, wird wieder auf das erste Element umgeschaltet.
- Aussenden des Tx-Pulses mit der von diesem Code-Element vorgegebenen zeitlichen Verschiebung.
- Anschließend wird wieder wie oben verfahren, so dass sich die Schleife schließt.

In einer besonderen Anwendung erfolgt die Tiefenbestimmung über eine Schiffsflotte mit zwei Schiffen 511, 513. Das erste Schiff 513 kodiert das Sendesignal 507 und sendet dieses in Richtung Meeresboden 431. Die Sendesignalinformationen und die Ortsinformationen (z.B. GPS) versendet das Schiff 513 mittels der Funkantenne 541 als Funksignal 551 an das zweite Schiff 511. Das zweite Schiff 511 empfängt mit seiner Antenne 543 das Funksignal 551 und empfängt mit einem Hydrophon das reflektierte Sendesignal 509. Aufgrund der Kenntnis des eigenen Ortes und des Ortes des ersten Schiffs 513 und der Signalinformation erfolgen die Autokorrelation und die anschließende Tiefen- oder Laufzeitbestimmung auf dem zweiten Schiff 511.

### Bezugszeichenliste

- 101: erstes Sendesignal (1.Alt.)
- 103: zweites Sendesignal (1.Alt.)
- 105: drittes Sendesignal (1.Alt.)
- eₓ: Erwartungszeitindex
- sₓ: Sendezeitindex
- t: Zeit
- 201: erstes Sendesignal (2.Alt.)
- 203: zweites Sendesignal (2.Alt.)
- 205: drittes Sendesignal (2.Alt.)
- 401: Wasseroberfläche
- 411: Einzelschiff
- 431: Meeresboden
- 507: ausgesandtes Sendesignal
- 509: reflektiertes Sendesignal
- 511: zweites Schiff
- 513: erstes Schiff
- 541: Funkantenne
- 551: Funksignal

## Patentansprüche

1. Unterwassersignalfolge mit wenigstens zwei akustischen Subsignalen, wobei jedem Subsignal jeweils ein Sendezeitindex und ein Erwartungszeitindex zugeordnet ist, **dadurch gekennzeichnet, dass** durch eine Unterwassersignalfolgen-Korrelation jedes einzelne Subsignal identifizierbar ist.

2. Unterwassersignalfolge nach Anspruch 1, **gekennzeichnet durch** drei, vier, fünf, sechs, sieben, acht, neun, zehn oder mehr akustische Subsignale.

3. Unterwassersignalfolge nach einem der vorherigen Ansprüche, **dadurch gekennzeichnet, dass** eines der Subsignale ein aktives Sonar-Signal, insbesondere ein Echolotsignal, ist.

4. Unterwassersignalfolge nach einem der vorherigen Ansprüche, **dadurch gekennzeichnet, dass** eine Subsignalabstandszeit den Wert t=0s oder einen Wert t>0s aufweist.

5. Unterwassersignalfolge nach einem der vorherigen Ansprüche, **dadurch gekennzeichnet, dass** wenigstens ein Subsignal eine Abweichung zwischen dem Sendezeitindex und dem Erwartungszeitindex aufweist.

6. Unterwassersignalfolge nach einem der vorherigen Ansprüche, **dadurch gekennzeichnet, dass** jeweils zwei, drei, vier oder mehr aufeinanderfolgende Subsignale identisch gruppiert sind.

7. Unterwassersignalfolge nach einem der vorherigen Ansprüche, **dadurch gekennzeichnet, dass** die Subsignale frequenzkodierungsfrei und/oder phasensprungfrei sind.

8. Unterwassersignalfolge nach einem der vorherigen Ansprüche, **dadurch gekennzeichnet, dass** die Subsignale eine zusätzliche Kodierung oder Modulation aufweisen.

9. Sendeeinrichtung mit einem Unterwassersignalgeber, **dadurch gekennzeichnet, dass** die Sendeeinrichtung derart eingerichtet ist, dass der Unterwassersignalgeber eine Unterwassersignalfolge nach einem der vorherigen Ansprüchen aussendet.

10. Auswertevorrichtung, insbesondere ein Sonar oder ein Echolot, welche eine Empfangseinrichtung und eine Sendeeinrichtung nach Anspruch 9 aufweist, wobei die Empfangseinrichtung einen Unterwasserschallwandler, insbesondere ein Unterwassermikrophon, aufweist.

11. Auswertevorrichtung nach Anspruch 10, **dadurch gekennzeichnet, dass** die Auswertevorrichtung und/oder die Empfangseinrichtung und/oder die Sendeeinrichtung delokalisiert sind.

12. Auswertevorrichtung nach einem der Ansprüche 10 bis 11, **gekennzeichnet durch** eine Korrelationseinrichtung, welche eine **durch** die Sendeeinrichtung ausgesendete Signalfolge mit einer **durch** die Empfangseinrichtung detektierten Empfangssignalfolge korreliert.

13. Auswertevorrichtung nach einem der Ansprüche 10 bis 12, **gekennzeichnet durch** eine Entfernungsbestimmungseinrichtung, welche insbesondere **durch** ein Bestimmen einer Laufzeit eines Subsignals einen Abstand zu einem Objekt, insbesondere zum Meeresboden, ermittelt und ausgibt.

14. Wasserfahrzeug, welches eine Auswertevorrichtung nach einem der Ansprüche 10 bis 13 aufweist.

15. Wasserfahrzeugflotte mit wenigstens zwei Wasserfahrzeugen, **dadurch gekennzeichnet, dass** die Sendeeinrichtung nach Anspruch 9 und/oder die Auswertevorrichtung nach einem der Ansprüche 10 bis 13 und/oder die Empfangseinrichtung und/oder die Korrelationseinrichtung und/oder die Entfernungsbestimmungseinrichtung der Auswertevorrichtung auf die Wasserfahrzeuge aufgeteilt sind.
